# EUROPÄISCHE PATENTANMELDUNG

(11) **EP 4 230 550 A1**
(43) Veröffentlichungstag der Anmeldung: **23.08.2023**
(21) Anmeldenummer: 23156831.2
(22) Anmeldetag: 15.02.2023
(51) Int. Cl.: B65G 9/00, B65G 17/20, B65G 21/22, E01B 25/24, F16B 7/18

(54) **PROFILVERBINDER FÜR HÄNGEFÖRDERANLAGE**

(30) Priorität: 17.02.2022 DE 102022103810
(71) Anmelder: Dematic GmbH, 63150 Heusenstamm (DE)
(72) Erfinder: Peiser, Thomas, 8103 Gratwein-Straßengel (AT); Tinnacher, Andreas, 8570 Voitsberg (AT)
(74) Vertreter: Moser Götze & Partner Patentanwälte mbB

(57) **Zusammenfassung**

Verbindungsadapter (1) für eine Verbindung von Profilteilstücken (100) eines Schienenprofils in einer Fördervorrichtung zur Beförderung von hängenden Gegenständen, wobei der Verbindungsadapter (1) in seinem Inneren eine Lauffläche (2) für die Lagerung von insbesondere auf Rollen (21) gelagerten Halteadaptern (20) aufweist, wobei die Lauffläche (2) derart schräg zu einer Profilerstreckungsrichtung (PER) des Verbindungsadapters (1) angeordnet ist, dass ein Querschnitt eines Innenraums (3) des Verbindungsadapters (1), der durch die Lauffläche (2) begrenzt ist, an einer ersten Stirnfläche (4) des Verbindungsadapters (1) größer ist als an einer zweiten Stirnfläche (5) des Verbindungsadapters (1).

## Beschreibung

Die Erfindung betrifft einen Verbindungsadapter für eine Verbindung von Profilteilstücken eines Schienenprofils in einer Fördervorrichtung zur Beförderung von hängenden Gegenständen nach Anspruch 1 sowie ein System mit einem solchen Verbindungsadapter nach Anspruch 5.

Eine Fördervorrichtung zur Beförderung von hängenden Gegenständen, wie beispielsweise Kleidungsstücken, Taschen und dergleichen, ist eine Sortier- und Verteilvorrichtung und spielt in der Intralogistik eine wichtige Rolle, wo sie häufig als Schnittstelle zwischen Lagerung und Auslieferung eingesetzt wird. Um den steigenden Anforderungen der Kunden gerecht zu werden, unterliegen die Fördervorrichtungen einer ständigen Weiterentwicklung, insbesondere hinsichtlich Prozesssicherheit und Effizienz.

Gattungsgemäße Fördervorrichtungen weisen auch als Hängefördertechnikprofile oder Transportprofile bezeichnete Schienenprofile auf, an denen Halteadapter gelagert und geführt sind. Die vorzugsweise mit Rollen ausgestatten Halteadapter sind insbesondere in einem unteren Bereich des Schienenprofils, insbesondere in einer sogenannten Free-Laufschiene, gelagert und geführt. An den Halteadaptern sind, vorzugsweise unterhalb der Free-Laufschiene, die hängenden Gegenstände lösbar befestigt. In den Schienenprofilen ist zudem eine Förderkette der Fördervorrichtung angeordnet, mit der die Halteadapter zu deren Beförderung koppelbar sind. Dazu greifen Mitnehmer der Förderkette insbesondere an einem Kopfteil des Halteadapters an, welches sich vorzugsweise in einen oberhalb der Free-Laufschiene befindlichen Bereich des Schienenprofils erstreckt.

Ein Schienenprofil kann eine Gesamtlänge von einigen Kilometern aufweisen, wobei das Schienenprofil dann aus einer Vielzahl von Profilteilstücken gebildet wird. Die derzeit verfügbaren Profilteilstücke weisen eine maximale Länge von 6 Metern auf, sodass - um derartige Gesamtlängen zu realisieren - eine sehr hohe Anzahl an Profilteilstücken aneinandergereiht und miteinander verbunden werden müssen.

An den so entstehenden, auch als Stoßbereiche bezeichneten, Verbindungsstellen können sich aufgrund unterschiedlicher Fertigungstoleranzen der einzelnen Profilteilstücke und/oder Ungenauigkeiten bei der Montage der Profilteilstücke sogenannte Vorlaufkanten ergeben, an welchen die in dem Schienenprofil geförderten Halteadapter ggf. hängen bleiben. Hierdurch können an den Halteadaptern Beschädigungen entstehen, welche sich negativ auf die Prozesssicherheit der Fördervorrichtung auswirken können.

Zur Vermeidung von Vorlaufkanten an den Verbindungsstellen sind enge Fertigungstoleranzen an den Profilteilstücken sowie eine sehr genaue und damit aufwendige Ausrichtung der Profilteilstücke zueinander bei deren Montage erforderlich. Zudem kann es nach einer Inbetriebnahme der Fördervorrichtung erforderlich sein, die Ausrichtung der Profilteilstücke zueinander "nachzuarbeiten", wenn beispielsweise während der Inbetriebnahme auftretende Belastungen zu Verschiebungen der Profilteilstücke an den Verbindungsstellen geführt haben.

Aus der US 9,290,328 B2 und der WO 2011/060 560 A2 ist eine Führungsanordnung zum Fördern von Druckprodukten bekannt, in welcher Führungsschienenelemente jeweils mit Hilfe von zwei zwischen den Führungsschienenelementen angeordneten und als Flansche ausgebildeten Verbindungselementen verbunden sind. Die Verbindungselemente sind an einer ihrer Stirnseiten jeweils mit einem der Führungsschienenelemente verbunden und an der gegenüberliegenden Stirnseite untereinander verbunden. Die Verbindungselemente dienen einer Selbstzentrierung und damit einer möglichst genauen Lageausrichtung der Führungsschienenelemente zueinander. Nachteilig an solchen Verbindungselementen ist allerdings, dass Fertigungstoleranten, beispielsweise Chargenunterschiede, an den Führungsschienenelementen nicht berücksichtigt werden können.

Demgegenüber besteht die Aufgabe der vorliegenden Erfindung darin, einen Verbindungsadapter sowie ein System mit einem solchen Verbindungsadapter bereitzustellen, mit welchen eine aufwendige Ausrichtung bei der Montage des Schienenprofils vermieden und vergleichsweise große Fertigungstoleranzen ermöglicht werden.

Diese Aufgabe wird durch den Verbindungsadapter mit den Merkmalen des Anspruchs 1 sowie das System mit den Merkmalen des Anspruchs 5 gelöst. Vorteilhafte Ausgestaltungen ergeben sich aus den Unteransprüchen und der Beschreibung.

Erfindungsgemäß wird ein Verbindungsadapter für eine Verbindung von Profilteilstücken eines Schienenprofils in einer Fördervorrichtung zur Beförderung von hängenden Gegenständen bereitgestellt, wobei der Verbindungsadapter in seinem Inneren eine Lauffläche für die Lagerung von insbesondere auf Rollen gelagerten Halteadaptern aufweist, wobei die Lauffläche derart schräg zu einer Profilerstreckungsrichtung des Verbindungsadapters angeordnet ist, dass ein Querschnitt eines Innenraums des Verbindungsadapters, der durch die Lauffläche begrenzt ist, an einer ersten Stirnfläche des Verbindungsadapters größer ist als an einer zweiten Stirnfläche des Verbindungsadapters.

Mit anderen Worten weist der Verbindungsadapter eine rampenförmige Lauffläche für die Lagerung der Halteadapter auf, welche in einem Winkel zur Profilerstreckungsrichtung des Verbindungsadapters verläuft, der größer als 0° ist und bevorzugt zwischen 0,5° und 2,5°, weiter bevorzugt zwischen 1° und 2° beträgt. Im Gegensatz zu den aus der US 9,290,328 B2 oder der WO 2011/060 560 A2 bekannten Verbindungselementen verläuft die Lauffläche also nicht eben.

Im Rahmen der Anmeldung wird darauf abgestellt, dass sich der unterschiedliche Querschnitt des Innenraums an den Stirnflächen ausschließlich aus der Anordnung bzw. dem Verlauf der Lauffläche ergibt. Zudem werden im Rahmen der Anmeldung Fertigungstoleranzen des Verbindungsadapters außer Betracht gelassen. Von einer Berücksichtigung der Fertigungstoleranzen bei der Fertigung des Verbindungsadapters durch den Fachmann wird allerdings ausgegangen.

Der Verbindungsadapter weist bevorzugt eine Länge zwischen 35 mm und 70 mm, weiter bevorzugt zwischen 40 mm und 60 mm, weiter bevorzugt zwischen 45 mm und 55 mm auf. Die Länge kann jedoch auch kleiner als 35 mm oder größer als 70 mm sein.

Von der Länge des Verbindungsadapters kann abhängig sein, wie schräg die Lauffläche ausgebildet ist, also wie groß der Winkel zur Profilerstreckungsrichtung ist. Ein kurzer Verbindungsadapter weist im Vergleich zu einem langen Verbindungsadapter zur Erfüllung desselben Zwecks insbesondere einen größeren Winkel auf. So kann beispielsweise an einem Verbindungsadapter, dessen Länge 50 mm beträgt, der Winkel zwischen der Lauffläche und der Profilerstreckungsrichtung 1,14° betragen, wohingegen an einem Verbindungsadapter, dessen Länge 70 mm beträgt, der Winkel zwischen der Lauffläche und der Profilerstreckungsrichtung 0,82° betragen kann.

Unter der Profilerstreckungsrichtung wird diejenige Richtung verstanden, in welcher sich der profilförmige Verbindungsadapter, insbesondere sein profilförmiger Adapterkörper, erstreckt. Es ist vorzugsweise vorgesehen, dass sich mit Ausnahme der Lauffläche und der Stirnflächen alle übrigen Flächen des Adapterkörpers in der Profilerstreckungsrichtung erstrecken. Die erste und die zweite Stirnfläche des Verbindungsadapters bzw. des Adapterkörpers verlaufen quer, insbesondere senkrecht, zur Profilerstreckungsrichtung. Mit anderen Worten verlaufen die Profilerstreckungsrichtung im Wesentlichen parallel zu einer Förderrichtung der Halteadapter und die Stirnflächen quer zu einer Förderrichtung der Halteadapter.

Im Inneren des vorzugsweise C-förmig ausgebildeten Adapterkörpers ist der auch als innere Geometrie bezeichnete Innenraum gebildet. Der Innenraum wird zur Seite hin jeweils durch einen Schenkel des Adapterkörpers und nach unten hin durch die Lauffläche begrenzt. Somit ergibt sich in Profilerstreckungsrichtung gesehen ein tunnelartiges Erscheinungsbild des Adapterkörpers, wobei der Querschnitt des Innenraums, der an der ersten Stirnfläche des Verbindungsadapters größer ist als an der zweiten Stirnfläche des Verbindungsadapters, senkrecht zur Profilerstreckungsrichtung verläuft.

Der Innenraum ist vorzugsweise funktional in zwei Bereiche unterteilt, wobei die funktionale Unterteilung beispielsweise durch jeweils einen Vorsprung an jedem der Schenkel des Adapterkörpers gebildet ist. Ein oberer Bereich des Innenraums ist insbesondere für die Förderkette vorgesehen. In diesem Bereich, insbesondere an den Schenkeln des Adapterkörpers, ist vorzugsweise eine Kettenführungsaufnahme, in welcher eine zur Lagerung und Führung der Förderkette verwendete Kettenführung anbringbar ist, vorgesehen. Ein unterer Bereich des Innenraums, welcher dann insbesondere mit der Free-Laufschiene eines Profilteilstücks vergleichbar ausgebildet ist, ist für die Lagerung der vorzugsweise mit Rollen ausgestatten Halteadapter vorgesehen. In diesem Bereich ist vorzugsweise neben der Lauffläche eine Führungsfläche für eine, insbesondere seitliche, Führung der Halteadapter vorgesehen.

Unter dem Begriff Halteadapter wird vorliegend sowohl ein leerer Halteadapter, als auch ein Halteadapter mit einem daran befestigten Gegenstand verstanden. Zur Befestigung des Gegenstands hat der vorzugsweise rollbar gelagerte Halteadapter eine geeignete Schnittstelle. Der Halteadapter weist zudem insbesondere ein Kopfteil auf, welches für eine Kopplung mit einer Förderkette der Fördervorrichtung geeignet ist.

Die beiden zuvor genannten Bereiche des Innenraums stehen derart miteinander in Verbindung, dass sich das Kopfteil des Halteadapters von dem unteren Bereich in den oberen Bereich erstrecken kann. Dies dient dazu, dass der Halteadapter zu dessen Beförderung mit der Förderkette, insbesondere mit einem Mitnehmerfinger der Förderkette, gekoppelt werden kann. Der untere Bereich ist zudem insbesondere nach unten hin offen, damit sich die Schnittstelle für die Befestigung des Gegenstands aus dem Verbindungsadapter heraus erstrecken kann. Die Lauffläche ist dann in Förderrichtung gesehen in einen linken und rechten Teil unterteilt.

Der Verbindungsadapter kann außen, vorzugsweise an dessen Adapterkörper, Befestigungsaufnahmen aufweisen, die insbesondere zur bzw. bei einer Befestigung des Verbindungsadapters an einem Profilteilstück verwendet werden können.

Der Verbindungsadapter kann beispielsweise als Spritzgussteil oder 3D-Druckteil oder Aluminiumgussteil, insbesondere Druckgussteil, ausgebildet sein. Vorzugsweise weist der Verbindungsadapter, insbesondere dessen Lauffläche, aufgrund eines für die Fertigung des Verbindungsadapters verwendeten Werkstoffs und/oder aufgrund einer Beschichtung des Verbindungsadapters, insbesondere der Lauffläche, eine Lebensdauer auf, die im Bereich einer Lebensdauer der zu verbindenden Profilteilstücke liegt und insbesondere dieser gleicht.

Mit dem erfindungsgemäßen Verbindungsadapter, insbesondere aufgrund der besonderen Anordnung der Lauffläche in dem Verbindungsadapter, können im Gegensatz zu bekannten Verbindungen höhere Lagetoleranzen, also Toleranzen hinsichtlich der Lage von Funktionsflächen der miteinander verbundenen Profilteilstücke zueinander, und auch höhere Fertigungstoleranzen, insbesondere Chargenunterschiede, an den Profilteilstücken bei gleichzeitiger Vermeidung von Vorlaufkanten erlaubt werden.

Mit dem erfindungsgemäßen Verbindungsadapter kann also sowohl die Montage als auch die Inbetriebnahme vereinfacht werden und insbesondere der Aufwand bei der Ausrichtung der Profilteilstücke zueinander reduziert werden. Ein mehrmaliges Nachstellen der Verbindungen wegen unterschiedlicher Belastungen im Zuge der Montage und Inbetriebnahme entfällt. Zudem wird ein prozesssicherer Betrieb der Fördervorrichtung ermöglicht.

Besonders vorteilhaft ist vorgesehen, dass eine Änderung des Querschnitts des Innenraums von der ersten Stirnfläche zu der zweiten Stirnfläche kontinuierlich, vorzugsweise linear, verläuft.

Mit anderen Worten ist die Änderung des Innenraumquerschnitts und somit eine Steigung der Lauffläche vorzugsweise auf der gesamten Länge des Verbindungsadapters gleichbleibend. Hierdurch wird eine besonders reibungslose Beförderung der Halteadapter in dem Verbindungsadapter ermöglicht.

Es ist jedoch auch denkbar, dass die Änderung des Innenraumquerschnitts nicht kontinuierlich verläuft, die Steigung der Lauffläche sich also ändert. Dabei könnte die Lauffläche beispielsweise auch einen ebenen Abschnitt aufweisen, der zwischen zwei schrägen Abschnitten angeordnet ist.

In vorteilhafter Weise weist der Verbindungsadapter mindestens ein Verriegelungselement zur kraftschlüssigen Befestigung des Verbindungsadapters an einem Profilteilstück, insbesondere in Form eines Spreizzapfens oder einer Klemmfeder, auf.

Das Verriegelungselement kann auch für eine formschlüssige Verbindung mit einem Profilteilstück, also ein formschlüssiges Eingreifen in das Profilteilstück geeignet sein. Zudem kann das Verriegelungselement für eine Positionierung des Verbindungsadapters an einem Profilteilstück geeignet sein.

Vorzugsweise weist der Verbindungsadapter mehrere solcher Verriegelungselemente auf. Die Verriegelungselemente können dabei unterschiedlich sein, sodass auch eine Kombination aus einem Spreizzapfen und einer Klemmfeder möglich ist.

Das mindestens eine Verriegelungselement ist an einer der Stirnflächen des Verbindungsadapters bzw. des Adapterkörpers angeordnet. Insbesondere ist das Verriegelungselement an einem ersten bzw. oberen Ende der Stirnfläche angeordnet.

Die Befestigung des Verbindungsadapters an einem Profilteilstück, die mittels des Verriegelungselements ermöglicht wird, kann als eine vorläufige Befestigung vorgesehen sein. In diesem Fall kann eine endgültige Befestigung des Verbindungsadapters an dem Profilteilstück beispielsweise mittels Schienen hergestellt werden, die in die Befestigungsaufnahmen des Verbindungsadapters bzw. Adapterköpers geschoben werden.

Vorteilhaft kann vorgesehen sein, dass der Verbindungsadapter zusätzlich oder alternativ zum Verriegelungselement mindestens ein Positionierungselement, insbesondere einen Positionierungsstift, zur Positionierung des Verbindungsadapters an einem Profilteilstück aufweist.

Das mindestens eine Positionierungselement ist ebenfalls an mindestens einer der Stirnflächen des Verbindungsadapters bzw. des Adapterkörpers und insbesondere an einem zweiten bzw. unteren Ende der Stirnfläche angeordnet. Das Positionierungselement kann dabei derart ausgebildet sein, dass dieses in dem Adapterkörper angeordnet ist und an beiden Stirnflächen des Adapterkörpers herausragt.

Die mittels des Positionierungselements ermöglichte Positionierung des Verbindungsadapters an einem Profilteilstück kann eine Raumrichtung oder, wie im Falle des Positionierungsstifts, zwei Raumrichtungen umfassen.

Vorzugsweise weist der Verbindungsadapter mehrere solcher Positionierungselemente auf.

Die Erfindung richtet sich ferner auf ein System mit zwei Profilteilstücken eines Schienenprofils einer Fördervorrichtung zur Beförderung von hängenden Gegenständen und einem erfindungsgemäßen Verbindungsadapter, wobei der Verbindungsadapter zwischen gegenüberliegenden Stirnflächen der Profilteilstücke angeordnet ist.

In dem erfindungsgemäßen System ist lediglich ein einzelner Verbindungsadapter zwischen den zwei Profilteilstücken angeordnet. Aufgrund der Anordnung der Lauffläche in dem Verbindungsadapter ist in Förderrichtung gesehen an einer Einlaufseite des Verbindungsadapters von einer Lauffläche eines davor angeordneten Profilteilstücks zu der Lauffläche des Verbindungsadapters und an der Auslaufseite des Verbindungsadapters von der Lauffläche des Verbindungsadapters zu einer Lauffläche eines dahinter angeordneten Profilteilstücks jeweils eine Abwärtsstufe ausgebildet.

Mit anderen Worten ist die Lauffläche des Verbindungsadapters derart zu den Laufflächen der Profilteilstücke angeordnet, dass jeweils am Übergang zwischen zwei angrenzenden Laufflächen eine Abwärtsstufe entsteht, welche auch als abfallende Kante bezeichnet werden kann und das Gegenteil zu einer Vorlaufkante ist. Der Verlauf der Lauffläche von dem davor angeordneten Profilteilstück über den Verbindungsadapter in das dahinter angeordnete Profilteilstück kann auch als kaskadenförmig bzw. wasserfallförmig bezeichnet werden.

Die Lauffläche an dem Profilteilstück ist ebenfalls für die Lagerung der Halteadapter geeignet und begrenzt einen Innenraum des Profilteilstücks, der dem Innenraum des Verbindungsadapters entspricht. Bezogen auf den Innenraum ist aufgrund der Anordnung der Lauffläche in dem Verbindungsadapter in Förderrichtung gesehen an der Einlaufseite der Querschnitt des Innenraums des Verbindungsadapters größer ausgebildet als ein Querschnitt des entsprechenden Innenraums des davor angeordneten Profilteilstücks und an der Auslaufseite der Querschnitt des Innenraums des Verbindungsadapters kleiner ausgebildet als ein Querschnitt des entsprechenden Innenraums des dahinter angeordneten Profilteilstücks.

Beim Einsetzen des Verbindungsadapters zwischen die beiden zu verbindenden Profilteilstücke ist deshalb darauf zu achten, dass die erste Stirnfläche des Verbindungsadapters an der Einlaufseite und die zweite Stirnfläche des Verbindungsadapters an der Auslaufseite angeordnet werden.

Der Innenraum des Profilteilstücks ist analog zum Innenraum des Verbindungsadapters vorzugsweise funktional in zwei Bereiche unterteilt, wobei die funktionale Unterteilung beispielsweise durch jeweils einen Vorsprung an Schenkeln des Profilteilstücks gebildet ist. Ein oberer Bereich des Innenraums ist insbesondere für die Förderkette und ein unterer, auch als Free-Laufschiene bezeichneter, Bereich des Innenraums für die Lagerung und Führung der vorzugsweise mit Rollen ausgestatteten Halteadapter vorgesehen. Die beiden Bereiche des Innenraums stehen derart miteinander in Verbindung, dass sich das Kopfteil des Halteadapters von dem unteren Bereich in den oberen Bereich erstrecken kann. Dies dient dazu, dass der Halteadapter zu dessen Beförderung mit der Förderkette, insbesondere mit einem Mitnehmerfinger der Förderkette, koppelbar ist. Der untere Bereich ist zudem insbesondere nach unten hin offen, damit sich die Schnittstelle des Halteadapters aus dem Verbindungsadapter heraus erstrecken kann, um Gegenstände befördern zu können.

Zur Befestigung des Verbindungsadapters an den Profilteilstücken greifen das mindestens eine Positionierungselement und das mindestens eine Verriegelungselement in entsprechende Aufnahmen des jeweiligen Profilteilstücks.

Das erfindungsgemäße System hat den Vorteil, dass Produktionstoleranzen der Profilteilstücke berücksichtigt und ausgeglichen werden und ein aufwendiges Ausrichten der Profilteilstücke zueinander entfallen kann. Vorlaufkanten werden mit dem erfindungsgemäßen System trotz des vereinfachten Ausrichtens vermieden, sodass die Halteadapter die Verbindungsstellen zwischen den Profilteilstücken störungsfrei passieren können.

In vorteilhafter Weise ist vorgesehen, dass an der Einlaufseite des Verbindungsadapters der Querschnitt des Innenraums des Verbindungsadapters größer ausgebildet ist als ein größter bei der Fertigung von den Profilteilstücken zulässiger Querschnitt des entsprechenden Innenraums des Profilteilstücks und an der Auslaufseite des Verbindungsadapters der Querschnitt des Innenraums des Verbindungsadapters kleiner ausgebildet ist als ein kleinster bei der Fertigung von den Profilteilstücken zulässiger Querschnitt des entsprechenden Innenraums des Profilteilstücks.

Bei dieser Ausführungsform werden bei der Anordnung der Lauffläche des Verbindungsadapters, insbesondere bei der Wahl des Winkels zwischen der Lauffläche und der Profilerstreckungsrichtung des Verbindungsadapters, also die zulässigen Produktionstoleranzen bzw. das gesamte Toleranzband hinsichtlich des Innenraums der Profilteilstücke berücksichtigt.

Somit können mittels des Verbindungsadapters die zulässigen Produktionstoleranzen ausgeglichen und Vorlaufkanten - unabhängig von den tatsächlich zu verbindenden Profilteilstücken und ohne eine aufwendige Ausrichtung derer zueinander - vermieden werden.

Weitere Details der Erfindung ergeben sich aus der nachfolgenden Beschreibung von Ausführungsbeispielen anhand der Zeichnung, in der
- Fig. 1: eine schematische perspektivische Ansicht einer Ausführungsform des erfindungsgemäßen Verbindungsadapters,
- Fig. 2: eine schematische Vorderansicht der Ausführungsform des erfindungsgemäßen Verbindungsadapters nach Fig. 1,
- Fig. 2a: eine schematische Vorderansicht der Ausführungsform des erfindungsgemäßen Verbindungsadapters nach Fig. 1 und eines nicht erfindungsgemäßen Halteadapters sowie eine schematische Schnittansicht einer nicht erfindungsgemäßen Förderkette,
- Fig. 3: eine schematische Seitenansicht der Ausführungsform des erfindungsgemäßen Verbindungsadapters nach Fig. 1,
- Fig. 4: eine schematische Schnittansicht der Ausführungsform des erfindungsgemäßen Verbindungsadapters nach Fig. 1,
- Fig. 5: eine schematische Seitenansicht einer Ausführungsform des erfindungsgemäßen Systems,
- Fig. 6: eine schematische und ausschnittsweise Schnittansicht des erfindungsgemäßen Systems zeigen.

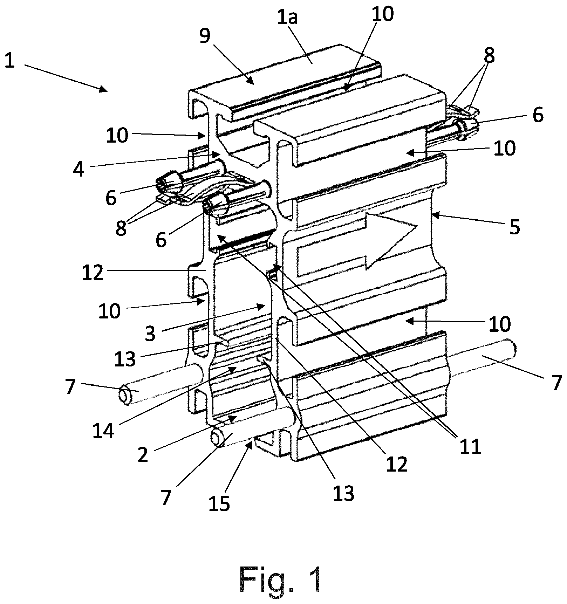

In der Figur 1 ist eine schematische perspektivische Ansicht einer Ausführungsform des erfindungsgemäßen Verbindungsadapters 1 gezeigt.

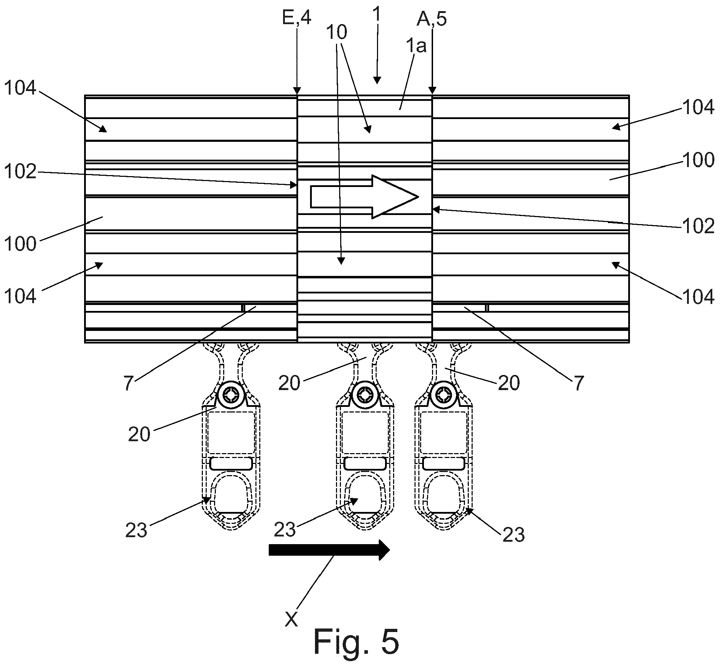

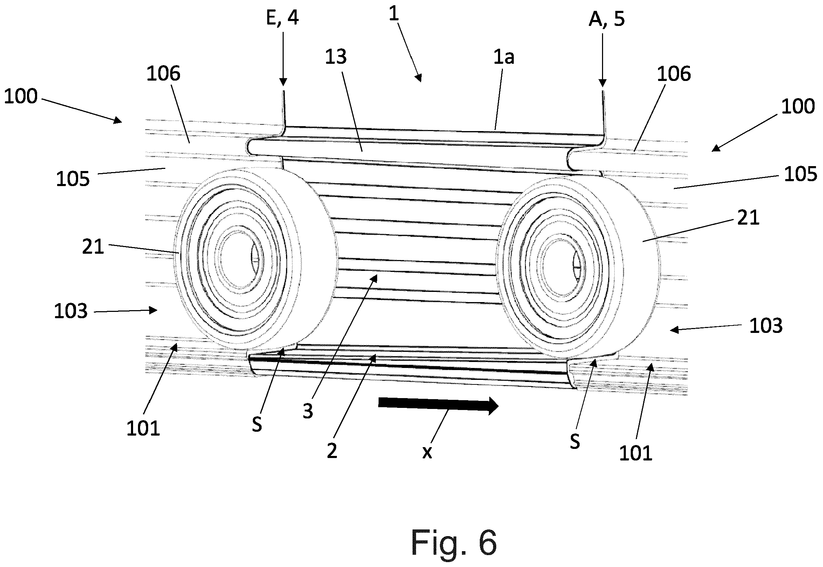

Der Verbindungsadapter 1 ist für eine Verbindung von Profilteilstücken 100 eines Schienenprofils (siehe Figuren 5 und 6) geeignet. Der Verbindungsadapter 1 hat einen im Querschnitt C-förmigen, auch als C-Profil bezeichneten, Adapterkörper 1a und weist vier Spreizzapfen 6, vier Klemmfedern 8 sowie zwei Positionierungsstifte 7 auf.

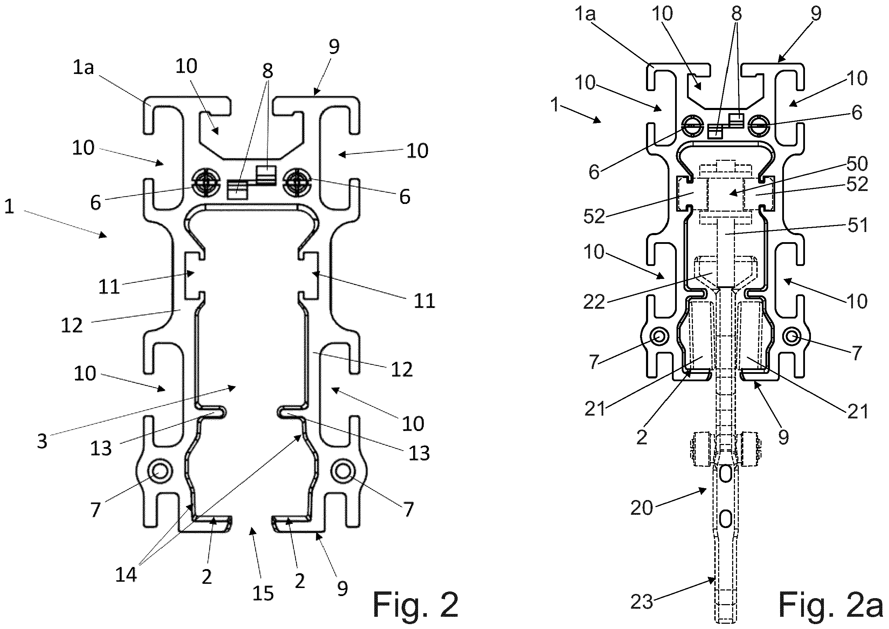

Im Inneren des Adapterkörpers 1a ist ein Innenraum 3 ausgebildet, welcher seitlich durch zwei Schenkel 12 begrenzt ist. An jedem der Schenkel 12 ist nach innen ein Vorsprung 13 ausgebildet. Die Vorsprünge 13 dienen einer funktionalen Unterteilung des Innenraums 3, wobei oberhalb der Vorsprünge 13 ein oberer Bereich für eine nicht dargestellte Förderkette 50 und unterhalb der Vorsprünge 13 ein unterer Bereich für nicht dargestellte, auf Rollen 21 gelagerte Halteadapter 20 gebildet ist (siehe auch Figur 2a).

Nach unten hin ist der Innenraum 3 durch eine Lauffläche 2 begrenzt. Die Lauffläche 2 ist in einer Förderrichtung x gesehen durch eine Öffnung 15 in einen linken und rechten Teil unterteilt. Der Innenraum 3 ist also nach unten hin offen, damit sich die Halteadapter 20 nach unten aus dem Adapterkörper 1a heraus erstrecken können, um an deren Schnittstellen 23 (siehe Figur 5) Gegenstände befördern zu können.

Die der Lagerung der Halteadapter 20 dienende Lauffläche 2 ist schräg, also in einem Winkel größer 0°, zu einer Profilerstreckungsrichtung PER des Verbindungsadapters 1 angeordnet. Die Profilerstreckungsrichtung PER ist diejenige Richtung, in welcher sich der profilförmige Adapterkörper 1a erstreckt. Mit Ausnahme der Lauffläche 2, einer ersten Stirnfläche 4 und einer zweiten Stirnfläche 5 erstrecken sich alle übrigen Flächen, also auch Außenflächen 9 des Adapterkörpers 1a in der Profilerstreckungsrichtung PER. Die erste Stirnfläche 4 und die zweite Stirnfläche 5 des Adapterkörpers 1a verlaufen quer, insbesondere senkrecht, zur Profilerstreckungsrichtung PER.

Aus der schrägen Anordnung der Lauffläche 2 ergibt sich, dass ein Querschnitt des Innenraums 3 an der ersten Stirnfläche 4 des Adapterkörpers 1a größer ist als an der zweiten Stirnfläche 5 des Adapterkörpers 1a. Eine Steigung der Lauffläche 2 ist auf der gesamten Länge des Adapterkörpers 1a gleichbleibend.

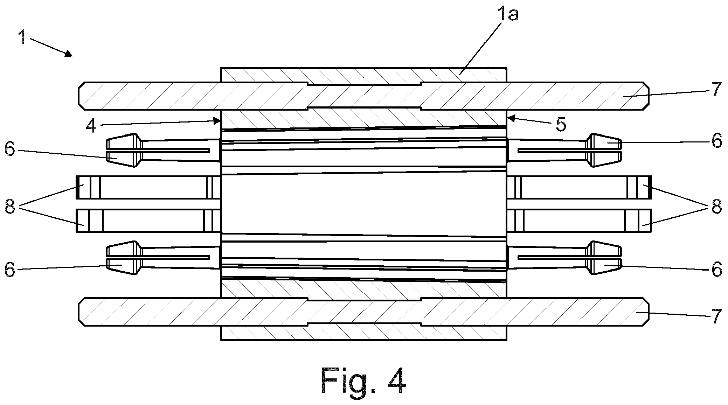

Die beiden Positionierungsstifte 7 sind in dem Adapterkörper 1a angeordnet (siehe Figur 4) und ragen an beiden Stirnflächen 4, 5 aus dem Adapterkörper 1a heraus. Die Positionierungsstifte 7 ermöglichten eine Positionierung des Verbindungsadapters 1 an einem Profilteilstück 100 in zwei Raumrichtungen.

Die vier Spreizzapfen 6 und die vier Klemmfedern 8 sind Verriegelungselemente, mit denen eine Befestigung des Verbindungsadapters 1 an einem Profilteilstück 100 möglich ist. Die Klemmfedern 8 ermöglichen eine kraftschlüssige, die Spreizzapfen 6 eine kraft- und formschlüssige Befestigung an dem Profilteilstück 100. Die Befestigung mittels der jeweils an einem oberen Ende der Stirnflächen 4, 5 des Adapterkörpers 1a angeordneten Spreizzapfen 6 und Klemmfedern 8 ist insbesondere eine vorläufige Befestigung.

Der Adapterkörper 1a weist außen Befestigungsaufnahmen 10 auf, die zur bzw. bei einer endgültigen Befestigung des Verbindungsadapters 1 an einem Profilteilstück 100 verwendet werden können. Eine solche Befestigung des Verbindungsadapters 1 an dem Profilteilstück 100 kann dann beispielsweise mittels Schienen realisiert werden, die in die Befestigungsaufnahmen 10 des Adapterköpers 1a sowie in Befestigungsaufnahmen 104 des Profilteilstücks 100 (siehe Figur 5) geschoben werden.

In der Figur 2 ist eine schematische Vorderansicht der Ausführungsform des erfindungsgemäßen Verbindungsadapters 1 nach Figur 1 gezeigt. In der Figur 2a ist eine schematische Vorderansicht der Ausführungsform des erfindungsgemäßen Verbindungsadapters 1 nach Figur 1 und eines nicht erfindungsgemäßen Halteadapters 20 sowie eine schematische Schnittansicht einer nicht erfindungsgemäßen Förderkette 50 gezeigt.

Die Föderkette 50, eine Kettenführung 52 sowie der mittels zweier Rollen 21 rollbar gelagerte Halteadapter 20 sind bekannt und gehören nicht zum Umfang der beanspruchten Erfindung. Diese sind lediglich zur Veranschaulichung einer möglichen Nutzung der dargestellten Ausführungsform des Verbindungsadapters 1 dargestellt.

In dieser Ansicht ist die C-Form des Adapterkörpers 1a und der sich darin ergebende Innenraum 3 gut zu erkennen. In dem oberen Bereich des Innenraums 3 ist an den Schenkeln 12 des Adapterkörpers 1a eine Kettenführungsaufnahme 11 vorgesehen, in der die zur Lagerung und Führung der Förderkette 50 verwendete Kettenführung 52 anbringbar ist. In dem unteren Bereich des Innenraums sind für die Lagerung der Halteadapter 20 die Lauffläche 2 sowie für eine seitliche Führung der Halteadapter 20 eine Führungsfläche 14 vorgesehen.

Der untere Bereich steht mit dem oberen Bereich des Innenraums 3 derart in Verbindung, dass sich ein Kopfteil 22 des Halteadapters 20 von dem unteren Bereich in den oberen Bereich erstrecken kann. Dies dient dazu, dass der Halteadapter 20 zu dessen Beförderung mit der Förderkette 50, insbesondere mit einem Mitnehmerfinger 51 der Förderkette 50, gekoppelt werden kann.

Gut zu erkennen ist auch, dass die Lauffläche 2 bei der vorliegenden Ausführungsform durch eine Öffnung 15 in einen linken und rechten Teil unterteilt ist. Die Öffnung 15 ist dafür vorgesehen, dass sich der Halteadapter 20 mit seiner Schnittstelle 23 zur Befestigung eines Gegenstands aus dem Adapterkörper 1a nach unten heraus erstrecken kann.

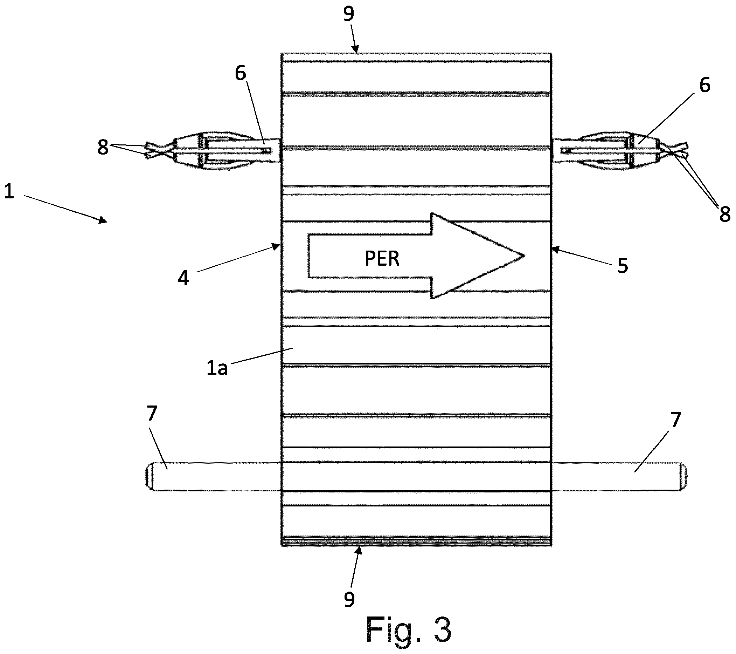

In der Figur 3 ist eine schematische Seitenansicht der Ausführungsform des erfindungsgemäßen Verbindungsadapters 1 nach Figur 1 gezeigt.

In dieser Ansicht ist gut zu erkennen, dass sich die Außenflächen 9 des Adapterkörpers 1a in Profilerstreckungsrichtung PER und die Stirnflächen 4, 5 senkrecht zur Profilerstreckungsrichtung PER erstrecken.

Gut zu erkennen ist auch, dass die Spreizzapfen 6, die Klemmfedern 8 sowie die Positionierungsstifte 7 senkrecht auf den Stirnflächen 4, 5 stehen und sich im Wesentlichen parallel zur Profilerstreckungsrichtung PER erstrecken.

In der Figur 4 ist eine schematische Schnittansicht der Ausführungsform des erfindungsgemäßen Verbindungsadapters 1 nach Figur 1 gezeigt.

In dieser Ansicht ist gut zu erkennen, dass der Verbindungsadapter 1 in der gezeigten Ausführungsform zwei jeweils einstückige Positionierungsstifte 7 aufweist. Die Positionierungsstifte sind jeweils derart an bzw. in dem Adapterkörper 1a angeordnet, dass sie beidseitig an den Stirnflächen 4, 5 aus dem Adapterkörper 1a herausragen. Alternativ zu solchen "durchgehenden" Positionierungsstiften 7 sind auch vier separate Positionierungsstifte 7 vorstellbar, die an jeder Stirnseite 4, 5 angeordnet sind. Der durchgehende Positionierungsstift 7 hat allerdings den Vorteil, dass damit eine höhere Positionierungsgenauigkeit erzielt werden kann.

In der Figur 5 ist eine schematische Seitenansicht einer Ausführungsform des erfindungsgemäßen Systems gezeigt.

Das System umfasst neben einem einzelnen Verbindungsadapter 1 zwei Profilteilstücke 100. Der Verbindungsadapter 1 ist zwischen den Profilteilstücken 100 und, genauer gesagt, zwischen sich gegenüberliegenden Stirnflächen 102 der Profilteilstücke 100 angeordnet. Die erste Stirnfläche 4 des Verbindungsadapters 1 ist in der angezeigten Förderrichtung x an einer Einlaufseite E des Verbindungsadapters 1 und die zweite Stirnfläche 5 des Verbindungsadapters 1 an einer Auslaufseite A des Verbindungsadapters 1 angeordnet.

Da der untere Bereich des Innenraums 3 nach unten hin offen ist, können sich die Halteadapter 20 bei der vorliegenden Ausführungsform des Systems nach unten hin aus dem Verbindungsadapter 1 heraus erstrecken. Auch hier sind die gezeigten Halteadapter 20 bekannt und gehören nicht zum Umfang der beanspruchten Erfindung. Diese sind auch hier lediglich zur Veranschaulichung einer möglichen Nutzung der dargestellten Ausführungsform des Systems dargestellt.

Die Profilteilstücke 100 weisen Befestigungsaufnahmen 104 auf, welche mit den Befestigungsaufnahmen 10 des Verbindungsadapters 1 korrespondieren. Dadurch ist möglich, dass der Verbindungsadapter 1 an dem Profilteilstück 100 mittels Schienen, die in die Befestigungsaufnahmen 10 des Adapterköpers 1a sowie in Befestigungsaufnahmen 104 des Profilteilstücks 100 (siehe Figur 5) geschoben werden, befestigt werden.

Gut zu erkennen ist, wie die Positionierungsstifte 7 zur Befestigung des Verbindungsadapters 1 an den Profilteilstücken 100 in entsprechende Aufnahmen des jeweiligen Profilteilstücks 100 greifen.

In der Figur 6 ist eine schematische und ausschnittsweise Schnittansicht des erfindungsgemäßen Systems gezeigt.

In dem gezeigten Ausschnitt sind die Anordnung und der Verlauf der Lauffläche 2 an dem Verbindungsadapter 1 und die daraus resultierenden Abwärtsstufen S an einer Einlaufseite E des Verbindungsadapters 1 sowie an einer Auslaufseite A des Verbindungsadapters 1, also jeweils einem Übergang zwischen einem Profilteilstück 100 und dem Verbindungsadapter 1, besonders gut zu erkennen. Die gezeigten Rollen 21 des Halteadapters 20 "fallen" also an den Abwärtsstufen geringfügig herab anstatt gegen Vorlaufkanten zu stoßen. Hierdurch werden Beschädigungen an den Rollen 21 verhindert.

Die beiden Profilteilstücke 100 weisen jeweils einen Innenraum 103 auf, welcher durch eine Lauffläche 101 begrenzt ist. Die Lauffläche 101 ist für die Lagerung der Halteadapter 20 geeignet. Der Verlauf der Lauffläche 101 des in Förderrichtung x vor dem Verbindungsadapter 1 angeordneten Profilteilstücks 100 über die Lauffläche 2 des Verbindungsadapters 1 zu der Lauffläche 101 des dahinter angeordneten Profilteilstücks 100 kann auch als kaskadenförmig bzw. wasserfallförmig bezeichnet werden.

Der Innenraum 103 des Profilteilstücks 100 ist analog zum Innenraum 3 des Verbindungsadapters 1 funktional in zwei Bereiche unterteilt, wobei die funktionale Unterteilung durch jeweils einen Vorsprung 106 an Schenkeln 105 des Profilteilstücks 100 gebildet ist. Ein oberer Bereich des Innenraums 103 ist für die Förderkette 50 und ein unterer Bereich des Innenraums 103 für die Lagerung und Führung der Halteadapter 20 vorgesehen. Die beiden Bereiche des Innenraums stehen wie an dem Verbindungsadapter 1 miteinander in Verbindung, sodass sich das Kopfteil 22 des Halteadapters 20 von dem unteren Bereich in den oberen Bereich erstrecken kann.

An der Einlaufseite E ist der Querschnitt des Innenraums 3 des Verbindungsadapters 1 größer ausgebildet als ein Querschnitt des Innenraums 103 des davor angeordneten Profilteilstücks 100. An der Auslaufseite A ist der Querschnitt des Innenraums 3 des Verbindungsadapters 1 hingegen kleiner ausgebildet als ein Querschnitt des Innenraums 103 des dahinter angeordneten Profilteilstücks 100.

### Bezugszeichenliste

- 1: Verbindungsadapter
- 1a: Adapterkörper
- 2: Lauffläche (Verbindungsadapter)
- 3: Innenraum (Verbindungsadapter)
- 4: erste Stirnfläche (Verbindungsadapter)
- 5: zweite Stirnfläche (Verbindungsadapter)
- 6: Spreizzapfen
- 7: Positionierungsstift
- 8: Klemmfeder
- 9: Außenfläche
- 10: Befestigungsaufnahme (Verbindungsadapter)
- 11: Kettenführungsaufnahme
- 12: Schenkel (Verbindungsadapter)
- 13: Vorsprung (Verbindungsadapter)
- 14: Führungsfläche
- 15: Öffnung
- 20: Halteadapter
- 21: Rolle
- 22: Kopfteil
- 23: Schnittstelle (für Gegenstand)
- 50: Förderkette
- 51: Mitnehmerfinger
- 52: Kettenführung
- 100: Profilteilstück
- 101: Lauffläche (Profilteilstück)
- 102: Stirnfläche (Profilteilstück)
- 103: Innenraum (Profilteilstück)
- 104: Befestigungsaufnahme (Profilteilstück)
- 105: Schenkel (Profilteilstück)
- 106: Vorsprung (Profilteilstück)
- A: Auslaufseite
- E: Einlaufseite
- PER: Profilerstreckungsrichtung
- S: Abwärtsstufe
- x: Förderrichtung

## Patentansprüche

1. Verbindungsadapter (1) für eine Verbindung von Profilteilstücken (100) eines Schienenprofils in einer Fördervorrichtung zur Beförderung von hängenden Gegenständen, wobei der Verbindungsadapter (1) in seinem Inneren eine Lauffläche (2) für die Lagerung von insbesondere auf Rollen (21) gelagerten Halteadaptern (20) aufweist, **dadurch gekennzeichnet, dass** die Lauffläche (2) derart schräg zu einer Profilerstreckungsrichtung (PER) des Verbindungsadapters (1) angeordnet ist, dass ein Querschnitt eines Innenraums (3) des Verbindungsadapters (1), der durch die Lauffläche (2) begrenzt ist, an einer ersten Stirnfläche (4) des Verbindungsadapters (1) größer ist als an einer zweiten Stirnfläche (5) des Verbindungsadapters (1).

2. Verbindungsadapter (1) nach Anspruch 1, **dadurch gekennzeichnet, dass** eine Änderung des Querschnitts des Innenraums (3) von der ersten Stirnfläche (4) zu der zweiten Stirnfläche (5) kontinuierlich, vorzugsweise linear, verläuft.

3. Verbindungsadapter (1) nach Anspruch 1 oder 2, **dadurch gekennzeichnet, dass** dieser mindestens ein Verriegelungselement zur kraftschlüssigen Befestigung des Verbindungsadapters (1) an einem Profilteilstück (100), insbesondere in Form eines Spreizzapfens (6) oder einer Klemmfeder (8), aufweist.

4. Verbindungsadapter (1) nach einem der vorhergehenden Ansprüche, **dadurch gekennzeichnet, dass** dieser mindestens ein Positionierungselement, insbesondere einen Positionierungsstift (7), zur Positionierung des Verbindungsadapters (1) an einem Profilteilstück (100) aufweist.

5. System mit zwei Profilteilstücken (100) eines Schienenprofils einer Fördervorrichtung zur Beförderung von hängenden Gegenständen und einem Verbindungsadapter (1) nach einem der vorhergehenden Ansprüche, wobei der Verbindungsadapter (1) zwischen gegenüberliegenden Stirnflächen (102) der Profilteilstücke (100) angeordnet ist, **dadurch gekennzeichnet, dass** lediglich ein einzelner Verbindungsadapter (1) zwischen den Profilteilstücken (100) angeordnet ist und aufgrund der Anordnung der Lauffläche (2) in dem Verbindungsadapter (1) in Förderrichtung gesehen an einer Einlaufseite (E) des Verbindungsadapters (1) von einer Lauffläche (101) eines davor angeordneten Profilteilstücks (100) zu der Lauffläche (2) des Verbindungsadapters (1) und an der Auslaufseite (A) des Verbindungsadapters (1) von der Lauffläche (2) des Verbindungsadapters (1) zu einer Lauffläche (101) eines dahinter angeordneten Profilteilstücks (100) jeweils eine Abwärtsstufe (S) ausgebildet ist.

6. System nach Anspruch 5, **dadurch gekennzeichnet, dass** an der Einlaufseite (E) des Verbindungsadapters (1) der Querschnitt des Innenraums (3) des Verbindungsadapters (1) größer ausgebildet ist als ein größter bei der Fertigung von den Profilteilstücken (100) zulässiger Querschnitt eines entsprechenden Innenraums (103) am Profilteilstück (100) und an der Auslaufseite (A) des Verbindungsadapters (1) der Querschnitt des Innenraums (3) des Verbindungsadapters (1) kleiner ausgebildet ist als ein kleinster bei der Fertigung von den Profilteilstücken (100) zulässiger Querschnitt eines entsprechenden Innenraums (103) am Profilteilstück (100).
